# EUROPÄISCHE PATENTSCHRIFT

(11) **EP 2 445 709 B1**
(45) Veröffentlichungstag und Bekanntmachung des Hinweises auf die Patenterteilung: **05.10.2016**
(21) Anmeldenummer: 10722967.6
(22) Anmeldetag: 10.06.2010
(51) Int. Cl.: B32B 5/00

(54) **VERFAHREN ZUR HERSTELLUNG EINES SCHAUMSTOFF-VERBUNDELEMENTS**
Method for producing a foam compound element
Procédé de fabrication d'un élément composite en mousse

(30) Priorität: 23.06.2009 EP 09008202
(43) Veröffentlichungstag der Anmeldung: 02.05.2012
(73) Patentinhaber: Covestro Deutschland AG, 51373 Leverkusen (DE)
(72) Erfinder: VAN DE BRAAK, Johannes, 53773 Hennef (DE); ROERS, Rolf, 51519 Odenthal (DE); HAAS, Peter, 42781 Haan (DE)
(74) Vertreter: Levpat
(86) Internationale Anmeldenummer: PCT/EP2010/003496
(87) Internationale Veröffentlichungsnummer: WO 2010/149272

(56) Entgegenhaltungen:
- EP-A1- 1 516 720
- US-A1- 2002 136 888

## Beschreibung

Die Erfindung betrifft ein Verfahren zur Herstellung eines Schaumstoff-Verbundelements, umfassend die Schritte des Bereitstellens einer Deckschicht, des Auftragens einer Haftvermittlerschicht auf die Deckschicht, wobei die Haftvermittlerschicht ein Urethan-modifiziertes Isocyanat umfasst, das erhältlich ist aus der Reaktion von monomeren und/oder polymeren Isocyanaten mit Polymerpolyolen, und des Auftragens einer Polyurethan und/oder Polyisocyanurat umfassenden Schaumstoffschicht auf die Haftvermittlerschicht. Das Urethan-modifizierte Isocyanat, das erhältlich ist aus der Reaktion von monomeren und/oder polymeren Isocyanaten mit Polymerpolyolen, weist beim Auftragen einen Gehalt an freien Isocyanatgruppen von ≥ 10% bis ≤ 25% auf. Die Erfindung betrifft weiterhin die Verwendung eines Urethan-modifizierten Isocyanats mit einem Gehalt an freien Isocyanatgruppen von ≥ 10% bis ≤ 25%, das erhältlich ist aus der Reaktion von monomeren und/oder polymeren Isocyanaten mit Polymerpolyolen, als Haftvermittler in der Herstellung von Schaumstoff-Verbundelementen sowie durch das erfindungsgemäße Verfahren erhaltene Schaumstoff-Verbundelemente.

Für die kontinuierliche Fertigung von Metallsandwichelementen auf der Basis von Polyurethan-Hartschaumstoffen, also sowohl Polyurethan- als auch Polyisocyanurat-Hartschaumstoffen, ist die Haftfestigkeit von metallischer Deckschicht zum Schaum wichtig, insbesondere wenn es sich bei dem Schaum um einen Polyisocyanurat-Schaum handelt. Im Markt etabliert sind Zweikomponenten-Polyurethan-Haftvermittlersysteme. Die Haftfestigkeiten durch Einsatz solcher Zweikomponenten-Haftvermittlersysteme werden prinzipiell deutlich verbessert, was für die Hersteller der Fertigteile eine Produktverbesserung bedeutet. Insbesondere werden die Langzeitrisiken für ein Haftungsversagen massiv reduziert.

Allerdings können bei der Verarbeitung solcher Zweikomponenten-Haftvermittlersysteme Schwierigkeiten mit einer ausreichenden Homogenisierung der Haftvermittlerkomponenten auftreten. Eine unzureichende Homogenisierung kann im Hinblick auf die Langzeit-Verbundeigenschaften der Metallverbundelemente ein hohes Risiko bedeuten, und zwar in der Weise, dass es bei wechselnden Temperaturen zu Haftungsversagen von Deckschicht zum Schaum kommen kann. Weiterhin kann die Verarbeitung eines Zweikomponenten-Haftvermittlersystems einen relativ hohen Ausschuss zu Beginn einer Produktionsphase bedeuten.

Zur Vermeidung des Risikos mangelhafter Verbundeigenschaften aufgrund nicht ausreichender Homogenisierung der beiden Haftvermittlerkomponenten bieten sich Einkomponenten-Lösungen an. Beispielsweise offenbart EP 1 516 720 A1 die Verwendung eines Polyurethan-Haftvermittlers zur Verbesserung der Haftung zwischen den Schichten eines Verbundelements, enthaltend einen Polyisocyanurat-Schaumstoff und Deckschichten, sowie die Verbundelemente als solche und ein Verfahren zu ihrer Herstellung.

In der US 2002/1368888 A1 werden Verbundsysteme gezeigt. die über eine Schaumstoffschicht aus Polyurethan und Deckschichten verfügen. welche über Haftschichten verbunden werden. Es wird allgemein offenbart, dass diese Haftschichten aus Polyurethan sein können; es werden jedoch keine Hinweise gegeben, wie solche Haftschichten vorteilhafterweise auszuführen sind.

EP 1 593 438 A2 offenbart eine Vorrichtung und Verfahren zur Herstellung von Sandwich-Verbundelementen. Die Vorrichtung besteht wenigstens aus zwei Zuführvorrichtungen für Deckschichten, an die eine Auftragsvorrichtung für einen Haftvermittler, eine Auftragsvorrichtung für eine Kernschicht, eine Fördervorrichtung und eine Ablenkvorrichtung hintereinander geschaltet sind. Die Auftragsvorrichtung für den Haftvermittler besteht wenigstens aus einer Zuführleitung für den Haftvermittler, einen Drehteller mit mindestens einer seitlichen Austrittsöffnung sowie einem Antrieb für den Drehteller. Als Haftvermittler können Einkomponentensysteme, zum Beispiel auf der Basis von Polyurethan, wie NCO-Gruppen enthaltende Prepolymere, eingesetzt werden. Weitere mögliche Einkomponentensysteme basieren auf Polychloropren, Epoxid oder Polyvinylacetat. Der Haftvermittler kann auch aus einem Mehrkomponentensystem, bevorzugt aus einem Zweikomponentensystem aufgebaut sein. Bevorzugte Zweikomponentensysteme sind Polyurethansysteme.

Eine ständige Aufgabe ist die Verbesserung der Haftung zwischen dem Schaum und den Deckschichten in Schaumstoff-Verbundelementen. Es besteht folglich der Bedarf an alternativen und verbesserten Verfahren zur Herstellung dieser Verbundelemente, die insbesondere eine verbesserte Haftung zwischen dem Schaum und den Deckschichten in Schaumstoff-Verbundelementen bei gleichzeitig geringerem Auftreten von Blasen und/oder Sollbruchstellen ermöglichen.

Erfindungsgemäß vorgeschlagen wird daher ein Verfahren zur Herstellung eines Schaumstoff-Verbundelements, umfassend die Schritte:
A) Bereitstellen einer Deckschicht;
B) Auftragen einer Haftvermittlerschicht auf die Deckschicht, wobei die Haftvermittlerschicht ein Urethan-modifiziertes Isocyanat umfasst, das erhältlich ist aus der Reaktion von monomeren und/oder polymeren Isocyanaten mit Polymerpolyolen;
C) Auftragen einer Polyurethan und/oder Polyisocyanurat umfassenden Schaumstoffschicht auf die Haftvermittlerschicht;

Die Angabe des Gehalts an freien Isocyanatgruppen erfolgt jeweils in Gewichtsprozent bezogen auf die Menge an eingesetztem Isocyanat.

Es wurde gefunden, dass durch den Einsatz eines erfindungsgemäßen Urethan-modifizierten Isocyanats, das erhältlich ist aus der Reaktion von monomeren und/oder polymeren Isocyanaten mit Polymerpolyolen, als Haftvermittler die Haftung des Schaums an der Deckschicht gegenüber bekannten Systemen verbessert werden konnte. Insbesondere ermöglicht die Verwendung von Urethan-modifizierten Isocyanaten, die erhältlich sind aus der Reaktion von monomeren und/oder polymeren Isocyanaten mit Polymerpolyolen, in Form von Prepolymeren, also Ein-Komponentensystemen gemäß der üblichen Terminologie, unzureichende Mischungsverhältnisse beim Einsatz von Zwei-Komponentensystemen zu vermeiden. Unzureichend gemischte Haftvermittlersysteme würden zur Blasenbildung oder zu Sollbruchstellen im Verbundmaterial führen. Vorteilhafterweise ermöglicht die Verwendung von Urethan-modifizierten Isocyanaten, die erhältlich sind aus der Reaktion von monomeren und/oder polymeren Isocyanaten mit Polymerpolyolen, in Form von Prepolymeren auch eine ganzflächige Benetzung der Deckschicht.

Die erfindungsgemäß hergestellten Schaumstoff-Verbundelemente eignen sich insbesondere als Wärmedämmelemente.

Schritt A) des erfindungsgemäßen Verfahrens betrifft das Bereitstellen einer Deckschicht. Dieses kann in kontinuierlichen Produktionsanlagen beispielsweise durch Abwickeln einer aufgerollten Deckschicht von einer Rolle geschehen. Die Art der Deckschicht ist zunächst nicht weiter festgelegt, wobei bevorzugt die im Bereich der Wärmeisolierung üblicherweise eingesetzten Materialien für Deckschichten verwendet werden können. Die Dicke der Deckschicht kann beispielsweise ≥ 200 µm bis ≤ 5 mm, bevorzugt ≥ 300 µm bis ≤ 2 mm und besonders bevorzugt ≥ 400 µm bis ≤ 1 mm betragen.

In Schritt B) wird eine Haftvermittlerschicht, die Urethan-modifzierte Isocyanate umfasst, die erhältlich sind aus der Reaktion von monomeren und/oder polymeren Isocyanaten mit Polymerpolyolen, auf eine bereitgestellte Deckschicht aufgetragen. Das Auftragen kann mit üblichen Techniken wie beispielsweise Aufsprühen oder Rollen erfolgen. Solche Urethan-modifizierten Isocyanate werden durch Reaktion eines Isocyanats mit einer geringeren als der stöchiometrischen Menge eines Polymerpolyols hergestellt.

Ein Urethan-modifiziertes Isocyanat kann auch als Polyurethan-Prepolymer bezeichnet werden. Der Begriff "Prepolymer" wird hierbei in seiner üblichen Bedeutung verstanden. Der Begriff "Polyurethan-Prepolymer" bezeichnet insbesondere reaktive Intermediate in der Reaktion von Isocyanaten zu Polyurethan-Polymeren. Sie werden hergestellt durch die Reaktion einer Polyolkomponente wie beispielsweise einem Polymerpolyol mit einem Überschuss einer Isocyanatkomponente.

Bevorzugt wird die Isocyanatkomponente ausgewählt aus der Gruppe bestehend aus Tetramethylendiisocyanat, Methylpentamethylendiisocyanat, Hexamethylendiisocyanat-1,6, Dodecamethylendiisocyanat, 1,4-Diisocyanato-cyclohexan, 1-Isocyanato-3,3,5-trimethyl-5-isocyanatomethyl-cyclohexan, 4,4'-Diisocyanatodicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, p-Xylylendiisocyanat, 1,3- und 1,4-Diisocyantomethyl-benzol, sowie aus diesen Verbindungen bestehende Gemische.

Polymerpolyole werden häufig auch als Graft-Polyole bezeichnet. Diese Polymerpolyole werden üblicherweise durch radikalische Polymerisation von geeigneten olefinischen Monomeren, beispielsweise Styrol, Acrylnitril, Acrylaten und/oder Acrylamid, in einem als Pfropfgrundlage dienenden Polyetherol hergestellt. Die Seitenketten entstehen im Allgemeinen durch Übertragung der Radikale von wachsenden Polymerketten auf Polyetherpolyole. Das Polymerpolyol enthält neben dem Propfcopolymerisaten überwiegend die Homopolymere der Olefine, dispergiert in unverändertem Polyetherol.

In einer bevorzugten Ausführungsform werden als Monomere Acrylnitril, Styrol, insbesondere Styrol und Acrylnitril im Verhältnis zwischen 1:1 bis 3:1, sowie gegebenenfalls in Gegenwart weiterer Monomerer, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.

Als Trägerpolyetherole kommen üblicherweise Verbindungen mit einer Hydroxylgruppen-Funktionalität von 2 bis 8, bevorzugt 3 bis 8, besonders bevorzugt 3 bis 6 (vorzugsweise 2 bis 3), einer Hydroxylzahl von 20 bis 100 mg KOH/g, bevorzugt 25 bis 70 mg KOH/g, hergestellt durch anionische, kationische oder neutrale Polymerisation (DMC) von Alkylenoxiden, bevorzugt Ethylen- und/oder Propylenoxid in Betracht.

Makromere, auch als Stabilisatoren bezeichnet, sind lineare oder verzweigte Polyole mit zahlenmittleren Molekulargewichten von bis zu 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten, wie 3-Isopropenyl-1,1-dimethylbenzyl-isocyanate, Isocyanato-ethylmethacrylate, an ein bereits bestehendes Polyol eingefügt werden. Während der radikalischen Polymerisation werden die Makromere mit in die Copolymerkette eingebaut. Dadurch bilden sich Blockcopolymere mit einem Polyether- und einem Poly-acrylnitrilstyrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toulol, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styrol.

Zur Initiierung der radikalischen Polymerisation werden üblicherweise Peroxid- oder AzoVerbindungen, wie Dibenzoyl-peroxide, Lauroylperoxide, t-Amylperoxy-2-ethylhexanoate, Di-t-butylperoxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Vorzugsweise enthalten die Polymerpolyole 1 bis 45 Gew.-%, besonders bevorzugt 5 bis 30 Gew.-%, ganz besonders bevorzugt 15 bis 25 Gew.-% Füllstoffe.

Die Dicke der Haftvermittlerschicht kann beispielsweise ≥ 200 µm bis ≤ 5 mm, vorzugsweise ≥ 300 µm bis ≤ 2 mm und besonders bevorzugt ≥ 400 µm bis ≤ 1 mm betragen.

Der Einsatz von Urethan-modifizierten Isocyanaten, die erhältlich sind aus der Reaktion von monomeren und/oder polymeren Isocyanaten mit Polymerpolyolen, als Haftvermittler erlaubt Unterbrechungen bei der Produktion von Schaumstoff-Verbundelementen, ohne dass dadurch eine höhere Menge an Ausschuss produziert wird. Während konventionelle Haftvermittler auf Basis von 2-Komponentensystemen nach kurzer Zeit abreagiert sind, sind modifizierte Haftvermittler latent reaktiv. Vorteilhafterweise kann daher die Produktion von Schaumstoff-Verbundelementen angehalten werden, sofern Probleme im Produktionsprozess auftreten, ohne dass große Mengen an Material verworfen werden müssen.

In Schritt C) wird auf die Haftvermittlerschicht eine Polyurethan und/oder Polyisocyanurat umfassende Schaumstoffschicht aufgetragen. Auch dieses kann in einer kontinuierlichen Produktionsanlage geschehen. Diese Schicht kann zum Beispiel in einer Dicke von ≥ 2 cm bis ≤ 25 cm, vorzugsweise von ≥ 5 cm bis ≤ 25 cm und besonders bevorzugt von ≥ 12 cm bis ≤ 24 cm vorliegen. Es können die Reaktionskomponenten erst unmittelbar vor dem Auftragen in einem Mischkopf vermischt werden und das zum Schaum führende Reaktionsgemisch unmittelbar auf die Haftvermittlerschicht aufgetragen werden. Alternativ kann die fertige Schaumstoffschicht aufgetragen, beispielsweise aufgelegt, werden. Insbesondere der Einsatz von Polyisocyanurat oder überwiegend Polyisocyanurat umfassenden Schäumen ist vorteilhaft, da diese auch mit einem reduzierten Gehalt an Flammschutzmitteln gute Flammschutzeigenschaften besitzen.

Zur Herstellung der Schaumstoffschicht kommen die üblichen aliphatischen, cycloaliphatischen und insbesondere aromatischen Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Als Verbindungen mit mindestens zwei gegenüber Isocyanatgruppen reaktiven Wasserstoffatomen kommen im Allgemeinen solche in Frage, die zwei oder mehrere reaktive Gruppen ausgewählt aus OH-Gruppen, SH-Gruppen, NH-Gruppen, NH₂-Gruppen und CH-aciden Gruppen wie β-Diketo-Gruppen im Molekül tragen. Vorzugsweise eingesetzt werden Polyetherole und/oder Polyesterole, wobei Polyetherpolyole bevorzugt sind. Die Hydroxylzahl der verwendeten Polyetherole und/oder Polyesterole beträgt vorzugsweise 25 bis 800 mg KOH/g, die Molmassen sind im Allgemeinen größer als 400 g/mol.

Erfindungsgemäß vorgesehen ist, dass das Urethan-modifizierte Isocyanat, das erhältlich ist aus der Reaktion von monomeren und/oder polymeren Isocyanaten mit Polymerpolyolen, der Haftvermittlerschicht beim Auftragen einen Gehalt an freien Isocyanatgruppen ≥ 10% bis ≤ 25% aufweist. Hierunter ist der Isocyanatgruppengehalt zu verstehen, wenn die Haftvermittlerschicht noch nicht mit der Schaumstoffschicht in Berührung gekommen ist. Bevorzugt liegt der Gehalt in einem Bereich von ≥ 12% bis ≤ 20%. Er lässt sich anhand der Norm DIN 53 185 bestimmen. Die Angabe des Gehalts an freien Isocyanatgruppen gibt den Gehalt im Moment des Auftragens auf die Deckschicht an.

Es ist möglich, dass die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% aufweist, welche gemäß DIN ISO 4590 bestimmt werden kann. Weiterhin kann die Schaumstoffschicht einen mittleren Zelldurchmesser nach ASTM 3576-77 von ≥ 10 µm bis ≤ 600 µm, bevorzugt von ≥ 50 µm bis ≤ 400 µm, aufweisen.

Selbstverständlich können im erfindungsgemäßen Verfahren nach dem Schritt C) auf die Schaumstoffschicht eine weitere Haftvermittlerschicht wie in Schritt B) und daran anschließend eine weitere Deckschicht wie in Schritt A) beschrieben aufgetragen werden. Man erhält dann ein beidseitig mit einer Deckschicht versehenes Schaumstoff-Verbundelement. Das Verfahren kann beispielsweise in einer konventionellen Doppelbandanlage durchgeführt werden.

In einer Ausführungsform des erfindungsgemäßen Verfahrens umfasst das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten. Insbesondere bevorzugt ist es, wenn die Deckschicht Aluminium-Metall oder Stahl ist. Das Aluminium bzw. der Stahl können dabei beschichtet sein. Die erfindungsgemäß eingesetzten Urethan-modifizierte Isocyanate, die erhältlich sind aus der Reaktion von monomeren und/oder polymeren Isocyanaten mit Polymerpolyolen, führen zu einer besonders guten Haftung insbesondere zwischen Polyisocyanurat-Schaumstoff und Aluminium-Deckschicht oder Stahl-Deckschicht.

In einer weiteren Ausführungsform des erfindungsgemäßen Verfahrens ist das Urethan-modifizierte Isocyanat in der Haftvermittlerschicht erhältlich aus der Reaktion von monomeren und/oder polymeren Diphenylmethandiisocyanat mit einem Polymerpolyol, welches eine durchschnittliche Funktionalität von ≥ 2 bis ≤ 8, bevorzugt von ≥ 3 bis ≤ 8, besonders bevorzugt von ≥ 3 bis ≤ 6, hat, aufweist.

Bevorzugt weist das Polymerpolyol einen Gehalt an primären Hydroxylgruppen von ≥ 50 mol-% bis ≤ 100 mol-% auf.

Beispielsweise kann ein Gemisch von 2,4'-Diisocyanatodiphenylmethan, 4,4'-Diisocyanatodiphenylmethan und polymerem Diphenylmethandiisocyanat mit Mengenanteilen von ≥ 5 Gewichts-% bis ≤ 15 Gewichts-% des 2,4'-Isomeren, ≥ 75 Gewichts-% bis ≤ 85 Gewichts-% des 4,4'-Isomeren sowie ≥ 5 Gewichts-% bis ≤ 15 Gewichts-% eines polymeren MDI einer Viskosität bei 25°C zwischen ≥ 100 mPas und ≤ 300 mPas eingesetzt werden. Hierbei addieren sich die Angaben der Gewichtsprozentanteile zu ≤ 100 Gewichts-%. Die Polymerpolyolkomponente kann beispielsweise hergestellt werden durch die Addition von Propylenoxid und Ethylenoxid an Glycerin als Startermolekül. Der Anteil von Propylenoxid kann vorteilhafterweise ≥ 80 bis ≤ 95 Gewichts-% und der Anteil an Ethylenoxid kann vorteilhafterweise ≥ 5 bis ≤ 20 Gewichts-% betragen. Der Anteil an primären Hydroxylgruppen im Polymerpolyol kann besonders bevorzugt auch in einem Bereich von ≥ 60 mol-% bis ≤ 80 mol-% liegen.

In einer weiteren Ausführungsform des erfindungsgemäßen Verfahrens wird die Haftvermittlerschicht auf die Deckschicht in einer Menge von ≥ 20 g/m² bis ≤ 50 g/m² aufgetragen, wobei diese Menge der Menge an monomeren und/oder polymeren Isocyanaten und Polymerpolyolen entspricht. Dieses stellt gegenüber bekannten Verfahren eine Verringerung der benötigten Menge an Haftvermittlerschicht dar. Die Menge der auf die Deckschicht aufgetragenen Haftvermittlerschicht kann auch in einem Bereich von ≥ 25 g/m² bis ≤ 35 g/m² liegen. Insgesamt ergibt sich hierbei also eine Materialersparnis.

In einer weiteren Ausführungsform des erfindungsgemäßen Verfahrens wird die Deckschicht nach dem Auftragen der Haftvermittlerschicht und des Reaktionsgemisches zum Herstellen der Schaumstoffschicht auf eine Temperatur von ≥ 30 °C bis ≤ 70 °C, besonders bevorzugt von ≥ 40 °C bis ≤ 60 °C erwärmt. Durch das Erwärmen der Deckschicht wird die Reaktion in der Haftvermittlerschicht beschleunigt und insgesamt eine festere Verbindung erhalten. Die Deckschicht kann vor dem Auftragen der Haftvermittlerschicht auch besonders bevorzugt auf eine Temperatur von ≥ 45 °C bis ≤ 55 °C erwärmt werden.

In einer weiteren Ausführungsform des erfindungsgemäßen Verfahrens ist die Schaumstoffschicht erhältlich aus der Reaktion eines Polyisocyanats und wenigstens einer Verbindung ausgewählt aus der Gruppe bestehend aus Polyesterpolyolen und Polyetherpolyolen umfassenden Reaktionsgemisches, wobei im Reaktionsgemisch zu Beginn der Reaktion das molare Verhältnis von Isocyanatgruppen zu Hydroxylgruppen ≥ 1:1 bis ≤ 5:1 beträgt. Mit anderen Worten ausgedrückt, beträgt der Index dieser Reaktionsmischung 100 bis 500. Der Index kann auch ≥ 150 bis ≤ 350 oder ≥ 200 bis ≤ 300 betragen. Bei solchen Kennzahlen werden überwiegend Polyisocyanuratschäume erhalten, welche wie bereits ausgeführt mit geringeren Mengen an Flammschutzmitteln auskommen und durch das erfindungsgemäße Verfahren dennoch fest an Deckschichten, insbesondere Aluminiumdeckschichten, angebunden werden können. Der Polyisocyanuratschaumstoff ist vorzugsweise ein Hartschaumstoff, definiert anhand seiner Druckspannung bei 10% Stauchung beziehungsweise von ≥ 100 kPa bis ≤ 300 kPa. Diese Druckspannung oder Druckfestigkeit kann gemäß DIN 53421/DIN EN ISO 604 bestimmt werden. Sie kann auch in einem Bereich von ≥ 150 kPa bis ≤ 250 kPa oder von ≥ 180 kPa bis ≤ 280 kPa liegen.

In einer weiteren Ausführungsform des erfindungsgemäßen Verfahrens beträgt die Rohdichte der Schaumstoffschicht ≥ 25 g/l bis ≤ 48 g/l, besonders bevorzugt ≥ 35 g/l bis ≤ 45 g/l. Sie kann anhand der Norm ISO 845 bestimmt werden. Es ist auch möglich, dass die Rohdichte ganz besonders bevorzugt ≥ 37 g/l bis ≤ 42 g/l, noch weiter bevorzugt ≥ 39 g/l bis ≤ 40 g/l beträgt. Unabhängig davon ist es weiterhin auch möglich, dass die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% auf, welche gemäß DIN ISO 4590 bestimmt werden kann. Weiterhin kann die Schaumstoffschicht einen mittleren Zelldurchmesser nach ASTM 3576-77 von ≥ 10 µm bis ≤ 600 µm, bevorzugt von ≥ 50 µm bis ≤ 400 µm, aufweisen.

Die vorliegende Erfindung betrifft weiterhin die Verwendung eines Urethan-modifizierten Isocyanats, das erhältlich ist aus der Reaktion von monomeren und/oder polymeren Isocyanaten mit Polymerpolyolen, mit einem Gehalt an freien Isocyanatgruppen von ≥ 10% bis ≤ 25% als Haftvermittler in der Herstellung von Schaumstoff-Verbundelementen. Details zu dem Urethan-modifizierten Isocyanat wurden bereits vorstehend beschrieben, so dass hierauf in vollem Umfang Bezug genommen werden kann.

In einer Ausführungsform der erfindungsgemäßen Verwendung ist das Urethan-modifizierte Isocyanat erhältlich aus der Reaktion von einem Gemisch aus 2,4'-Diisocyanatodiphenylmethan, 4,4'-Diisocyanatodiphenylmethan und monomeren und/oder polymeren Diphenylmethandiisocyanat mit einem Polymerpolyol, welches eine durchschnittliche Funktionalität von ≥ 2 bis ≤ 8, bevorzugt von ≥ 3 bis ≤ 8, besonders bevorzugt von ≥ 3 bis ≤ 6, aufweist. Auch hierzu wird bezüglich der Details auf das vorstehend Beschriebene Bezug genommen.

Ein weiterer Gegenstand der vorliegenden Erfindung ist ein Schaumstoff-Verbundelement, erhalten durch ein erfindungsgemäßes Verfahren, wobei die Haftfestigkeit zwischen der Deckschicht und der Schaumstoffschicht ≥ 0,20 N/mm² bis ≤ 1,00 N/mm², besonders bevorzugt ≥ 0,20 N/mm² bis ≤ 0,50 N/mm², ganz besonders bevorzugt ≥ 0,20 N/mm² bis ≤ 0,30 N/mm², beträgt. Insbesondere kann die Schaumstoffschicht hierbei eine Polyisocyanurat-Schaumstoffschicht sein. Die Haftfestigkeit wird hierbei vorteilhafterweise in Anlehnung an DIN 53292 gemessen. Im praktischen Einsatz wird eine untere Grenze von 0,20 N/mm² als kritische Grenze für eine ausreichende Haftfestigkeit angesehen.

### Beispiele

Die vorliegende Erfindung wird anhand der nachfolgenden Beispiele näher beschrieben werden.

### Beispiel 1: Herstellung des Urethan-modifizierten Isocyanats

Unter Rühren wurde für zwei Stunden bei 95 °C ein Gemisch aus 500,0 g eines Isocyanats aus 10,0 Gewichts-% 2,4'- Diphenylmethandiisocyanat, 80,0 Gewichts-% 4,4'-Diphenylmethandiisocyanat und 10,0 Gewichts-% eines polymeren MDI der Viskosität 200 mPa s bei 25 °C sowie ein Polymerpolyol einer OH-Zahl von 28 mg KOH/g, hergestellt durch Addition von 82 Gewichts-% Propylenoxid und 18 Gewichts-% Ethylenoxid an Glycerin als Startermolekül mit überwiegend primären Hydroxylgruppen und einem Füllstoffgehalt von 20 Gewichts-% aus 60 Gewichts-% Acrylnitril und 40 Gew.-% Styrol, zur Umsetzung gebracht. Der ermittelte Gehalt an freien Isocyanatgruppen betrug 14,4 %. Die Viskosität bei 25 °C betrug 2183 mPas.

### Beispiel 2:

Die Herstellung des modifzierten Isocyanats erfolgte gemäß Beispiel 1. Es wurden 300,0 g des Isocyanatgemisches aus Beispiel 1 mit 700,0 g des Polymerpolyols aus Beispiel 1 zur Umsetzung gebracht. Der ermittelte Gehalt an freien Isocyanatgruppen betrug 21,50 %. Die Viskosität bei 25 °C betrug 4330 mPas.

### Beispiel 3 (Vergleich):

100 g eines Isocyanatgemisches aus Beispiel 1 wurden zu 1547,0 g eines Polyetherpolyols der OH-Zahl 56 mg KOH/g hergestellt durch Addition von 100 Gew.-% Propylenoxid an Ethylenglycol als Starter getropft und das Reaktionsgemisch für 2 h bei 95 °C erhitzt. Es sind keine freien NCO-Gruppen mehr nachweisbar. Die Viskosität bei 25 °C betrug 5497 mPas.

Die Haftvermittlerzusammensetzung wurde auf ein auf 40 °C vorgewärmtes Aluminiumblech mit einer Vorrichtung, wie sie in EP 1 593 438 A2 beschrieben wird, aufgetragen. Die Menge an Haftvermittler betrug hierbei 50 g/m².

Anschließend wurde hierauf ein Polyisocyanuratschaum aufgetragen mit folgender Zusammensetzung:
A-Komponente:
   39 Teile Polyetheresterol 1 aus Phthalsäureanhydrid, Diethylenglycol und Ethylenglycol mit einer Funktionalität von 2, einer Hydroxylzahl von 310 mg KOH/g. 15,7 Teile Polyetherol 1 aus Propylenglycol, Propylenoxid und Ethylenoxid mit einer Funktionalität von 2 und einer Hydroxylzahl von 28 mg KOH/g;
   12 Teile Polyetherol 2 aus Zucker, Ethylenglycol und Propylenoxid mit einer Funktionalität von 3 und einer Hydroxylzahl von 380 mg KOH/g;
   25 Teile Flammschutzmittel 1 (Trischlorisopropylphosphat, TCPP);
   5 Teile Stabilisator 1 (silikonhaltiger Stabilisator);
   3,5 Teile Katalysator 1 (PIR-Katalysator, Salz einer Carbonsäure);
   2,5 Teile Polyesterol 1 (aus Phthalsäureanhydrid und Diethylenglycol);
   2,5 Teile Katalysator 2 (aminhaltiger Polyurethankatalysator);
   Treibmittel 1 (n-Pentan), Treibmittel 2 (Wasser);
B-Komponente:
   Desmodur 44V70L (polymeres MDI, erhältlich von Bayer Material Science AG)

Es wurde die Haftfestigkeit in Anlehnung an die Norm DIN 53292 überprüft. Die Durchführung unterscheidet sich dabei vom Zugversuch senkrecht zur Deckschichtebene nach DIN 53292-82 durch die unterschiedliche Probendicke und Anzahl der Deckschichten. Beim Versuch nach DIN 53292-82 wird die gesamte Dicke der Deckschichten zugrunde gelegt. Dabei bestimmt der schwächste Bereich der Gesamtprobe den Bruchort. Demgegenüber erlaubt der Haftversuch in der hier beschriebenen Abwandlung eine seitenbezogene Beurteilung der Haftung.

Zur Probenentnahme wird daher ein Verbundelement senkrecht zu den Deckschichten geschnitten. Bei der Messung werden quadratische Proben verwendet, deren Seitenlänge 50 mm und deren Probenhöhe 15 mm (einschließlich der Deckschicht) beträgt.

Ebenfalls wurde die Blasenbildung nach Temperung bei 105 °C für 1 h überprüft.

**Tabelle 1.**

| Beispiel | Auftrag [g/m²] | Haftung [N/mm²] auf der Unterseite | Blasenbildung |
|---|---|---|---|
| 1 | 50 | 0,24 | Keine |
| 2 | 50 | 0,22 | Keine |
| 3 | 50 | Nicht vermessen wegen auftretender Blasenbildung | Vorhanden |

Es wurde weiterhin beobachtet, dass im erfindungsgemäßen System nach Wärmelagerung des Schaumstoffverbundelements bei 105 °C für 1 Stunde der Grenzbereich zwischen Schaum und Deckschicht im Bereich der unteren Deckschicht blasenfrei war. Wenn kein Haftvermittler eingesetzt wurde bzw. bei unzureichender Vermischung von 2K-Haftvermittlern, kam es während der Wärmelagerung im Bereich der unteren Deckschicht zu einer unerwünschten Blasenbildung.

## Patentansprüche

1. Verfahren zur Herstellung eines Schaumstoff-Verbundelements, umfassend die Schritte:
A) Bereitstellen einer Deckschicht;
B) Auftragen einer Haftvermittlerschicht auf die Deckschicht, wobei die Haftvermittlerschicht ein Urethan-modifiziertes Isocyanat umfasst, das erhältlich ist aus der Reaktion von monomeren und/oder polymeren Isocyanaten mit Polymerpolyolen;
C) Auftragen einer Polyurethan und/oder Polyisocyanurat umfassenden Schaumstoffschicht auf die Haftvermittlerschicht;
wobei das Urethan-modifiziertes Isocyanat in der Haftvermittlerschicht beim Auftragen einen Gehalt an freien Isocyanatgruppen von ≥ 10% bis ≤ 25% aufweist.

2. Verfahren gemäß Anspruch 1, wobei das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

3. Verfahren nach Anspruch 1, wobei das Polymerpolyol 1 bis 45 Gew.-% Füllstoffe bezogen auf das Polymerpolyol enthält.

4. Verfahren gemäß Anspruch 1, wobei das Urethan-modifizierte Isocyanat in der Haftvermittlerschicht erhältlich ist aus der Reaktion von monomerem und/oder polymerem Diphenylmethandiisocyanat mit einem Polymerpolyol, welches eine durchschnittliche Funktionalität von ≥ 2 bis ≤ 8 aufweist.

5. Verfahren gemäß Anspruch 1, wobei die Haftvermittlerschicht auf die Deckschicht in einer Menge von ≥ 20 g/m² bis ≤ 50 g/m² aufgetragen wird.

6. Verfahren gemäß Anspruch 1, wobei die Deckschicht vor dem Auftragen der Haftvermittlerschicht auf eine Temperatur von ≥ 30 °C bis ≤ 70 °C erwärmt wird.

7. Verfahren gemäß Anspruch 1, wobei die Schaumstoffschicht erhältlich ist aus der Reaktion eines Polyisocyanate und wenigstens eine Verbindung ausgewählt aus der Gruppe bestehend Polyesterpolyolen und Polyetherpolyolen umfassenden Reaktionsgemisches, wobei im Reaktionsgemisch zu Beginn der Reaktion das molare Verhältnis von Isocyanat-Gruppen zu Hydroxyl-Gruppen ≥ 100:100 bis ≤ 400:100 beträgt.

8. Verfahren gemäß Anspruch 1, wobei die Rohdichte der Schaumstoffschicht ≥ 30 g/l bis ≤ 48 g/l beträgt.

9. Verwendung eines Urethan-modifizierten Isocyanats mit einem Gehalt an freien Isocyanatgruppen von ≥ 10% bis ≤ 25%, das erhältlich ist aus der Reaktion von monomeren und/oder polymeren Isocyanaten mit Polymelpolyolen, als Haftvermittler in der Herstellung von Schaumstoff-Verbundelementen.

10. Verwendung gemäß Anspruch 9, wobei das Urethan-modifizierte Isocyanat erhältlich ist aus der Reaktion von monomerem und/oder polymerem Diphenylmethandiisocyanat mit einem Polymerpolyol, welches eine durchschnittliche Funktionalität von ≥ 2 bis ≤ 8 aufweist.

11. Schaumstoff-Verbundelement, erhalten durch ein Verfahren gemäß Anspruch 1, wobei die Haftfestigkeit zwischen der Deckschicht und der Schaumstoffschicht ≥ 0,20 N/mm² bis ≤ 0,40 N/mm² beträgt.

## Claims

1. Method for producing a foam composite element, comprising the steps of:
A) preparing an outer layer;
B) applying an adhesion promoter layer to the outer layer, where the adhesion promoter layer comprises a urethane-modified isocyanate which can be obtained from the reaction of monomeric and/or polymeric isocyanates with polymer polyols; and
C) applying a foam layer comprising polyurethane and/or comprising polyisocyanurate to the adhesion promoter layer;
where, on application, the urethane-modified isocyanate in the adhesion promoter layer has from ≥ 10% to ≤ 25% content of free isocyanate groups.

2. Method according to Claim 1, where the material of the outer layer comprises aluminium, steel, bitumen, paper, mineral nonwovens, nonwovens comprising organic fibres, plastics sheets, plastics films and/or timber sheets.

3. Method according to Claim 1, where the polymer polyol comprises from 1 to 45% by weight of fillers, based on the polymer polyol.

4. Method according to Claim 1, where the urethane-modified isocyanate in the adhesion promoter layer can be obtained from the reaction of monomeric and/or polymeric diphenylmethane diisocyanate with a polymer polyol which has an average functionality of from ≥ 2 to ≤ 8.

5. Method according to Claim 1, where the adhesion promoter layer is applied to the outer layer in a quantity of from ≥ 20 g/m² to ≤ 50 g/m².

6. Method according to Claim 1, where, prior to the application of the adhesion promoter layer, the outer layer is heated to a room temperature of from ≥ 30°c to ≤ 70°c.

7. Method according to Claim 1, where the foam layer can be obtained from the reaction of a reaction mixture that comprises polyisocyanates and that compromises at least one compound selected from the group consisting of polyester polyols and polyether polyols, where the molar ratio of isocyanate groups to hydroxy groups in the reaction mixture at the start of the reaction is from ≥ 100:100 to ≤ 400:100.

8. Method according to Claim 1, where the apparent density of the foam layer is from ≥ 30 g/l to ≤ 48 g/l.

9. Use of a urethane-modified isocyanate which has from ≥ 10% to ≤ 25% content of free isocyanate groups and which may be obtained from the reaction of monomeric and/or polymeric isocyanates with polymer polyols, as adhesion promoter in the production of foam composite elements.

10. Use according to Claim 9, where the urethane-modified isocyanate can be obtained from the reaction of monomeric and/or polymeric diphenylmethane diisocyanate with a polymer polyol which has an average functionality of from ≥ 2 to ≤ 8.

11. Foam composite element obtained by a method according to Claim 1, where the bond strength between the outer layer and the foam layer is from ≥ 0.20 N/mm² to ≤ 0.40 N/mm².

## Revendications

1. Procédé pour la fabrication d'un élément composite en mousse, comprenant les étapes :
A) mise à disposition d'une couche de recouvrement ;
B) application d'une couche de promoteur d'adhérence sur la couche de recouvrement, la couche de promoteur d'adhérence comprenant un isocyanate modifié par uréthane pouvant être obtenu à partir de la réaction d'isocyanates monomères et/ou polymères avec des polymères polyols ;
C) application d'une couche de mousse comprenant du polyuréthane et/ou du polyisocyanurate sur la couche de promoteur d'adhérence ;
l'isocyanate modifié par uréthane dans la couche de promoteur d'adhérence présentant, lors de l'application, une teneur en groupes isocyanate libres ≥ 10% à ≤ 25%.

2. Procédé selon la revendication 1, le matériau de la couche de recouvrement comprenant de l'aluminium, de l'acier, du bitume, du papier, des non-tissés minéraux, des non-tissés comprenant des fibres organiques, des panneaux en matériau synthétique, des feuilles en matériau synthétique et/ou des panneaux en bois.

3. Procédé selon la revendication 1, le polymère polyol contenant de 1 à 45 % en poids de charges par rapport au polymère polyol.

4. Procédé selon la revendication 1, l'isocyanate modifié par uréthane dans la couche de promoteur d'adhérence pouvant être obtenu par la réaction de diisocyanate de diphénylméthane monomère et/ou polymère avec un polyol polymère présentant une fonctionnalité moyenne ≥ 2 à ≤ 8.

5. Procédé selon la revendication 1, la couche de promoteur d'adhérence étant appliquée sur la couche de recouvrement en une quantité ≥ 20 g/m² à ≤ 50 g/m².

6. Procédé selon la revendication 1, la couche de recouvrement, avant l'application de la couche de promoteur d'adhérence, étant chauffée à une température de ≥ 30°C à ≤ 70°C.

7. Procédé selon la revendication 1, la couche de mousse pouvant être obtenue à partir de la réaction d'un mélange réactionnel comprenant des polyisocyanates et au moins un composé choisi dans le groupe constitué par des polyesterpolyols et des polyétherpolyols, le rapport molaire des groupes isocyanate aux groupes hydroxyle dans le mélange réactionnel au début de la réaction étant ≥ 100:100 à ≤ 400:100.

8. Procédé selon la revendication 1, la densité brute de la couche de mousse étant ≥ 30 g/l à ≤ 48 g/l.

9. Utilisation d'un isocyanate modifié par uréthane présentant une teneur en groupes isocyanate libres ≥ 10% à ≤ 25%, pouvant être obtenu à partir de la réaction d'isocyanates monomères et/ou polymères avec des polymères polyols comme promoteur d'adhérence lors de la fabrication d'éléments composites en mousse.

10. Utilisation selon la revendication 9, l'isocyanate modifié par uréthane pouvant être obtenu à partir de la réaction de diisocyanate de diphénylméthane monomère et/ou polymère avec un polymère polyol présentant une fonctionnalité moyenne ≥ 2 à ≤ 8.

11. Élément composite en mousse obtenu par un procédé selon la revendication 1, l'adhérence entre la couche de recouvrement et la couche de mousse étant ≥ 0,20 N/mm² à ≤ 0,40 N/mm².
